# EUROPÄISCHE PATENTSCHRIFT

(11) **EP 0 535 492 B1**
(45) Veröffentlichungstag und Bekanntmachung des Hinweises auf die Patenterteilung: **07.12.1994**
(21) Anmeldenummer: 92116101.4
(22) Anmeldetag: 21.09.1992
(51) Int. Cl.: B27L 5/00, B27K 3/02, B05C 3/10, B65G 49/04

(54) **Vorrichtung zur thermischen Vorbehandlung von Holzrohlingen**
Apparatus for the thermal pretreatment of wood blanks
Dispositif pour le prétraitement thermique d'ébauches en bois

(30) Priorität: 23.09.1991 DE 4131643
(43) Veröffentlichungstag der Anmeldung: 07.04.1993
(73) Patentinhaber: HAMBERGER INDUSTRIEWERKE GmbH, D-83003 Rosenheim (DE)
(72) Erfinder: Hipper, August, W-8201 Rohrdorf (DE); Hamberger, Peter, W-8209 Stephanskirchen (DE)
(74) Vertreter: Polte, Willi, Dr.-Ing.

(56) Entgegenhaltungen:
- DE-A- 1 528 256
- DE-C- 639 104
- GB-A- 2 015 601
- US-A- 2 355 278
- US-A- 4 299 189
- US-A- 4 362 197
- US-A- 4 686 121

## Beschreibung

Die Erfindung betrifft eine Vorrichtung zur thermischen Vorbehandlung von Holzrohlingen gemäß dem Oberbegriff des Patentanspruchs 1.

Derartige Vorrichtungen finden bspw. bei der Herstellung von Holz-Furnieren Anwendung. Die Furniere werden mit Hilfe einer Messermaschine aus quaderförmigen Holzrohlingen, sog. Friese oder Kanteln, hergestellt. Um die Holzrohlinge in derartigen Messermaschinen zu qualitativ hochwertigen Furnieren verarbeiten zu können, müssen die Rohlinge bei ca. 60° bis 90°C in einem Wärmebehandlungsmedium, vorzugsweise Wasser, vorbehandelt werden. Aus der US-A-4 362 197 ist eine Vorrichtung gemaß dem Oberbegriff des Patentanspruchs 1 bekannt, bei der die Holzrohlinge in Radialfächern einer Trommel angeordnet sind, die in einem offenen Wärmebehandlungsbad läuft. Es hat sich gezeigt, daß die Positionierung der Holzrohlinge in den offenen Radialfächern während der Umdrehung der Trommel Schwierigkeiten bereitet. Zudem kommt es aufgrund der offenen Bauweise des Wärmebehandlungsbads zu Wärmeverlusten und somit zu einer Verringerung des Wirkungsgrads der Anlage.

Bei der aus der GB-A-2 015 602 bekannten Vorrichtung werden die Holzrohlinge seitlich, von der Stirnseite der Trommel her zugeführt. Dabei zeigte es sich, daS diese Zuführungsart nur für lange Holzrohlinge geeignet ist, während kurze Rohlinge, d.h. Rohlinge, die wesentlich kürzer als die Trommellänge sind, nur unter großen Schwierigkeiten im Trommelinneren positioniert und nach der Behandlung aus dem Trommelinneren abgeführt werden konnten.

Der Erfindung liegt die Aufgabe zugrunde, eine Vorrichtung zur thermischen Vorbehandlung von Holzrohlingen zu schaffen, bei der bei zuverlässiger Positionierung der Holzrohlinge eine Wärmebehandlung mit verringerten Wärmeverlusten gewährleistet ist.

Diese Aufgabe wird durch die Merkmale des Patentanspruchs 1 gelöst.

Die radiale Zuführung der Holzrohlinge durch den trommelförmigen Außbenmantel ermöglicht eine wesentlich einfachere Abdichtung der Trommel bei verminderten thermischen Verlusten. Desweiteren ist der Platzbedarf für die Anlage bei einer Zuführung der Holzrohlinge radial von oben wesentlich geringer als bei einer stirnseitigen Zuführung.

Ein weiterer Vorteil gegenüber der stirnseitigen Zuführung besteht darin, daß der Wasserauftrieb parallel zur Zu/Abführrichtung wirkt und die Holzrohlinge somit nicht durch den Wasserauftrieb aus dieser Radialposition bewegt werden. Bei der stirnseitigen Zuführung wirken die Auftriebskräfte quer zur Zuführung, wodurch die Holzrohlinge aus der Zu-/Abführbahn abgelenkt werden und somit Positionierungsfehler auftreten können.

Die Weiterbildungen gemäß den Unteransprüchen 2 und 3 ermöglichen eine weitgehend automatisierte Zu- bzw. Abführung der Holzrohlinge.

Die vorteilhafte Weiterbildung gemäß Unteranspruch 4 ermöglicht eine konstruktiv einfache und kostengünstige Ausgestaltung der Trommel, die sich darüberhinaus durch ein geringes Gewicht auszeichnet, wodurch die Antriebsleistung der Antriebselemente auf ein Minimum reduzierbar ist.

Die Ausbildung der Innentrommel in einer Merkmalskombination der Patentansprüche 5 bis 7 ist besonders vorteilhaft anwendbar, wenn relativ lange Bretter oder Holzbohlen in der Messermaschine weiter verarbeitet werden sollen, die parallel zur Drehachse der Trommel in den Radialfächern angeordnet werden, wobei durch die Weiterbildung gemäß Unteranspruch 7 sichergestellt ist, daß jeder Holzrohling im Parallelabstand zum nächsten Fachboden in der Trommel angeordnet ist.

Wenn die Holzrohlinge gemäß Unteranspruch 6 lediglich entlang den stirnseitigen Endabschnitten der Innentrommel abgestützt werden, läßt sich in vorteilhafter Weise eine Abführeinrichtung gemäß Unteranspruch 8 einsetzen. Während bei einer Abstützung der Holzrohlinge gemäß Unteranspruch 4 in vorteilhafter Weise eine Abführeinrichtung in einer Merkmalskombination der Unteransprüche 9 bis 11 verwenden. Eine weitere Gewichtsreduzierung der Trommel und damit eine Minimierung der notwendigen Antriebsleistung ermöglich die Weiterbildung nach Patentanspruch 21, wobei durch die Ausnehmungen zusätzlich eine Querströmung des Wärmebehandlungsmediums zwischen den Radialflächen ermöglicht ist.

Weitere vorteilhafte Weiterbildungen der Erfindung sind Gegenstand der übrigen Unteransprüche.

Bevorzugte Ausführungsbeispiele der Erfindung werden im folgenden anhand der Zeichnungen näher erläutert. Es zeigen:
- Fig. 1: eine Schnittdarstellung der Seitenansicht eines ersten Ausführungsbeispiels;
- Fig. 2: einen Schnitt des Ausführungsbeispiels aus Fig. 1 entlang der Linie A-B;
- Fig. 3: eine Detaildarstellung einer Fachscheibe;
- Fig. 4: eine Schnittdarstellung einer Seitenansicht eines weiteren Ausführungsbeispiels; und
- Fig. 5: eine Schnittdarstellung der Vorderansicht des Ausführungsbeispiels aus Fig. 4.

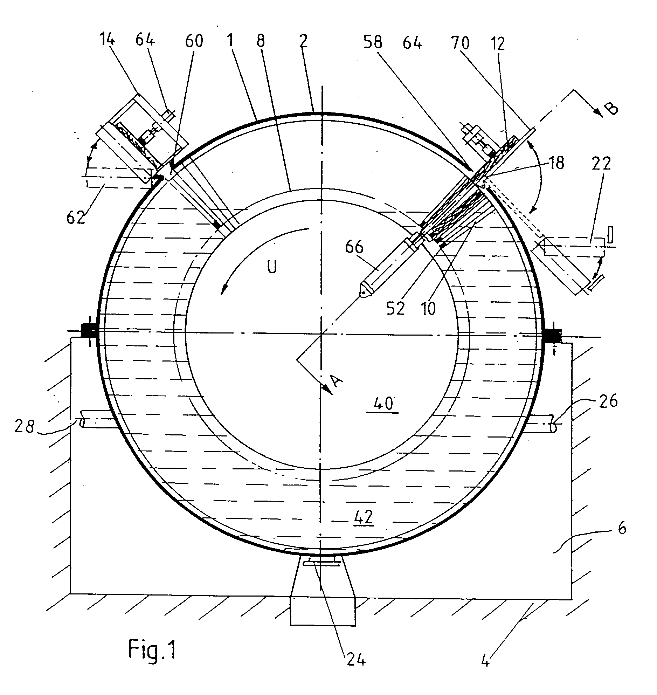

Gemäß den Fig. 1, 2, 4 und 5 hat die erfindungsgemäße Trommel 1 einen zweiteiligen Außenmantel 2, der in einem Fundament 4 mit einer Isolierschicht 6 abgestützt ist. In dem zylinderförmigen Außenmantel ist eine Innentrommel 8 drehbar gelagert, entlang deren Außenumfang Radialfächer 10 zur Aufnahme der Holzrohlinge 12 (Friese, Kanteln, Holzbohlen) ausgebildet sind. Diese können mittels einer Zuführeinrichtung 14 durch eine Längsausnehmung 60 den Fächern zugeführt und mittels einer Abführeinrichtung 18 durch eine Längsausnehmung 58 aus der Trommel 1 entnommen werden. Die vorbehandelten Rohlinge werden mittels eines Transportbandes 22 der Messermaschine zur weiteren Verarbeitung zugeführt.

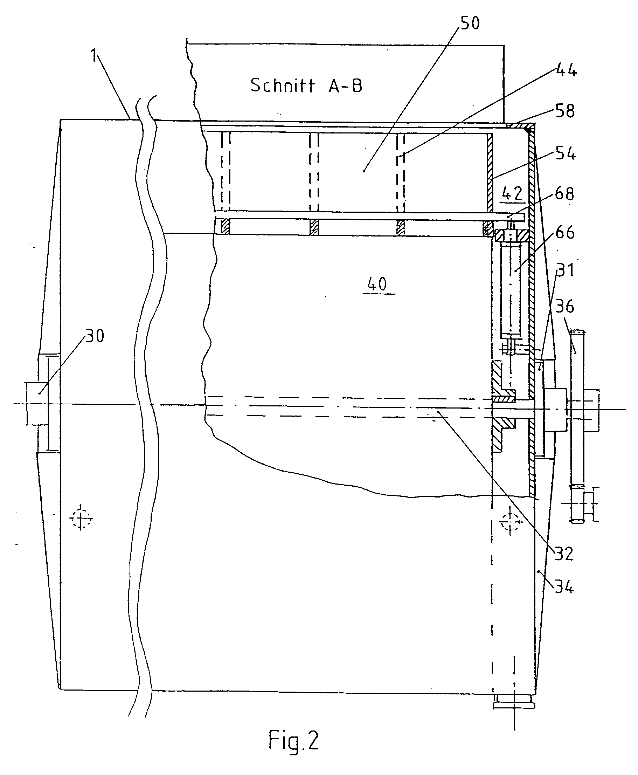

Im folgenden wird anhand der Fig. 1 und 2 zunächst ein erstes Ausführungsbeispiel der Erfindung beschrieben, bei dem die Rohlinge 12, genauer gesagt Friese oder Kanteln, "stehend" in den Radialfächern 10 der Trommel 1 angeordnet sind.

Der Außenmantel 2 der Trommel 1 hat einen Zweiteiligen Aufbau, wobei der Außenmantel 2 in seiner horizontalen Symmetrieebene teilbar ist und der untere Außenmantelabschnitt im Fundament 4 mit der Isolierschicht 6 abgestützt ist. In dem in Fig. 1 tiefliegendsten Teil des Auflageabschnitts des Außenmantels 2 ist ein Abfluß 24 vorgesehen, mit dem das Wärmebehandlungsmedium aus dem Inneren der Trommel 1 abführbar ist. Des weiteren sind am Auflageabschnitt des Außenmantels 2 ein Vorlauf 26 und ein Rücklauf 28 für das Wärmebehandlungsmedium vorgesehen, die zu einer Kreislaufpumpe und einem Wärmetauscher ( nicht gezeigt) führen, so daß das Wärmebehandlungsmedium im Kreislauf führbar ist und vorbestimmte Betriebsbedingungen im Inneren der Trommel 1 einstellbar sind.

In den Stirnseiten der Trommel 1 sind Lagereinrichtungen 30, 31 für eine Antriebswelle 32 der Innentrommel 8 ausgebildet, wobei die Stirnseiten zur Aufnahme der erheblichen Lagerkräfte mit Verstärkungen 34 versehen sind. Die Antriebswelle 32 steht über eine Übersetzung 36 in Wirkverbindung mit einem Antriebsmotor 38. Die Drehzahl des Antriebsmotors 38 und das Übersetzungsverhältnis sind derart gewählt, daß sich die Rohlinge 12 während nahezu einer Umdrehung der Innentrommel 8 für eine vorbestimmte Verweilzeit in dem Wärmebehandlungsmedium befinden.

Die Innentrommel 8 ist drehfest mit der Antriebswelle 32 verbunden, wobei zwischen dem Außenumfang der Innentrommel 8 und dem Außenmantel 2 ein Ringraum 42 gebildet ist, in dem sich das Wärmebehandlungsmedium befindet. Auch der Raum zwischen den stirnseitigen Endabschnitten des Grundkörpers 40 und des Außenmantels 2 ist im wesentlichen mit dem Wärmebehandlungsmedium ausgefüllt.

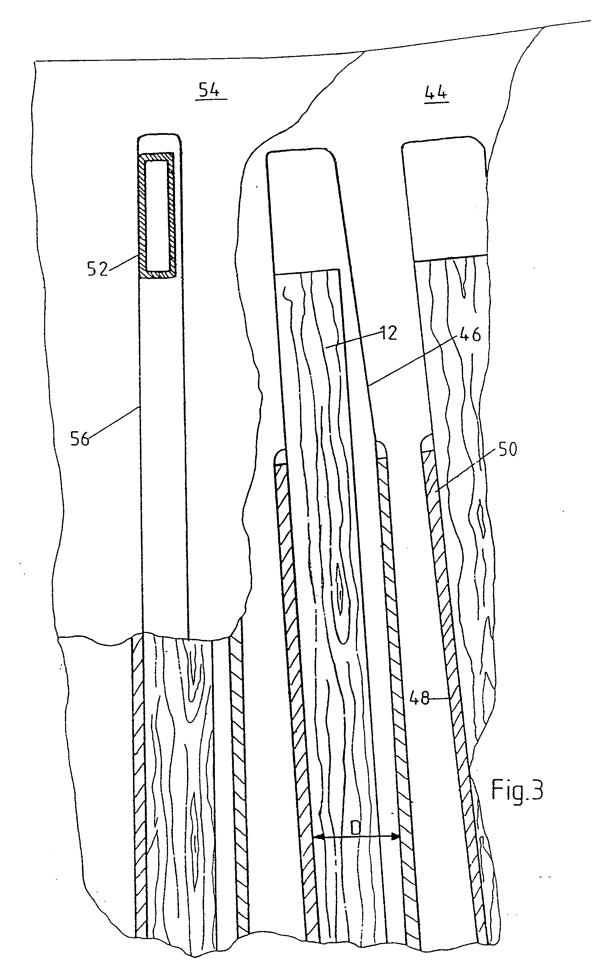

Am Außenumfang des Grundkörpers 40 sind im Axialabstand zueinanderstehende Fachscheiben 44 befestigt, die sich jeweils vom Grundkörper 40 weg hin zum radial benachbarten Abschnitt des Außenmantels 2 erstrecken. Gemäß der Detaildarstellung in Fig. 3 sind die Fachscheiben 44 mit Radialschlitzen 46 versehen, wobei 95 Schlitze am Umfang der Außenscheibe verteilt sind. Die Fachscheiben 44 sind derart auf dem Grundkörper 40 angeordnet, daß die Schlitze 46 jeweils axial zueinander ausgerichtet sind. Wie aus Fig. 3 hervorgeht, sind die Schlitzkanten der Radialschlitze 46 mit Ausnehmungen 48 versehen, die als Aufnahme- bzw. Befestigungsabschnitt für Axialplanken 50 dienen, die die einander zugeordneten Schlitze 46 (Schlitzreihe) der Fachscheiben 44 verbinden und somit Auflageflächen für die Rohlinge 12 bilden.

Die Tiefe der Ausnehmungen 48 und die Stärke der parallel zur Drehachse der Trommel 1 verlaufenden Axialplanken 50 ist derart gewählt, daß die zu verarbeitenden Rohlinge 12 mit einem gewissen Spiel auf den Axialplanken 50 aufliegen können. Üblicherweise werden in der beschriebenen Trommel 1 Friese mit einer Länge von 300 bis 550 mm, einer Breite von 70 mm und einer Dicke von 24 mm verarbeitet. Bei derartigen Friesen wird die Schlitzweite D, d.h. der Parallelabstand der Axialplanken 50 im Bereich von 34 mm (24 + 10 mm) gewählt.

Der drehachsenseitige Auflageabschnitt jedes Radialfachs ist durch eine radial innerhalb des Schlitzes 46 bewegbare Auswerferstange 52 gebildet, die jede Schlitzreihe der Fachscheiben 44 im wesentlichen parallel zu den Axialplanken 50 durchsetzt. Wie oben erwähnt, werden bspw. 95 Schlitze in jeder Fachscheibe ausgebildet, so daß 95 Auswerferstangen im Bereich der Innentrommel 8 geführt sind. Die Führung der Auswerferstangen 52 erfolgt durch Außenscheiben 54, die in Verlängerung der beiden Stirnflächen der Innentrommel 8 ausgebildet sind. Beim bevorzugten Ausführungsbeispiel sind die Außenscheiben in Form von Blechaufdopplungen auf den im Bereich der Stirnflächen angeordneten Fachscheiben 54 ausgebildet. In jeder Außenscheibe 54 ist axial fluchtend zu den Radialschlitzen 46 jeweils ein Führungsschlitz 56 (s. Fig. 3) ausgebildet, in dem jeweils eine Auswerferstange geführt ist. Wie aus Fig. 3 entnehmbar ist, ist die Weite des Führungsschlitzes 56 geringer als die Dicke des Rohlings 12 und damit des Radialschlitzes 46 gewählt, so daß die Außenscheiben 54 den seitlichen Abschluß der Radialfächer 10 bilden. Die Fachscheiben 44 und die Außenscheiben 54 erstrecken sich radial bis nahe zum Außenmantel 2, so daß jedes Radialfach 10 praktisch durch zwei Axialplanken 50, eine Auswerferstange 52, die beiden Außenscheiben 54 und den Außenmantel 2 der Trommel 1 gebildet ist.

Zur Zu- und Entnahme der Holzrohlinge 12 sind im Außenmantel 2 eine Abführöffnung 58 und eine Zuführöffnung 60 in Form von Längsschlitzen ausgebildet. Zur Vermeidung von Flüssigkeitsverlusten ist der Füllstand F des Wärmebehandlungsmediums im Ringraum 42 derart gewählt, daß er in einem vorbestimmten Abstand unterhalb der Ab-/Zuführöffnungen 58, 60 liegt. Bei der Beschickung der Trommel 1 werden die Holzrohlinge 12 nebeneinanderliegend mittels eines Zuführbandes 62 bereitgestellt und durch eine Anpreßeinrichtung 64 auf dem Zuführband 62 fixiert. Dieses läßt sich um einen vorbestimmten Winkel derart verschwenken, daß seine Auflagefläche radial in der Verlängerung eines Radialfachs 10 angeordnet ist. Aus dieser Schwenkposition lassen sich die Rohlinge 12 mittels der Zuführeinrichtung 14 in das Radialfach einführen, wobei beim oben beschriebenen Ausführungsbeispiel die Längsachse jedes Holzrohlings 12 in Radialrichtung orientiert ist (s. Fig. 2). Da die Drehzahl der Trommel 1 sehr gering ist, muß diese während der Beschickung der Rohlinge 12 nicht angehalten werden, so daß ein kontinuierlicher Betrieb der Trommel 1 ermöglicht ist. Die Trommel 1 läßt sich jedoch selbstverständlich auch diskontinuierlich betreiben. Aufgrund der Drehung der Innentrommel 8 in Drehrichtung U werden die Holzrohlinge 12 in das Wärmehandlungsmedium eingetaucht, wobei diese im Bereich des unteren Teilabschnitts des Außenmantels 2 aufgrund des Auftriebs gegen den zylinderförmigen Abschnitt der Innentrommel 8 gedrückt werden. Im oberen Abschnitt des Außenmantels 2 wirkt der Auftrieb radial nach außen, so daß die Holzrohlinge 12 am Außenmantel 2 anliegen können. Durch den Spalt zwischen den Planken 50 und den Holzrohlingen 12 ist deren wirksame Umspülung und damit eine gleichmäßige Vorbehandlung der Holzrohlinge 12 gewährleistet.

Auf dem der Zuführöffnung 60 horizontal gegenüberliegenden Abschnitt des Außenmantels 2 ist die Abführöffnung 58 ausgebildet, durch die die Holzrohlinge 12 aus dem Inneren der Trommel 1 entnehmbar sind. Dazu läßt sich jede Auswerferstange 52 mittels vorzugsweise zweier Hubzylinder 66 (pneumatisch oder hydraulisch betrieben) in seine radial außenliegende Auswurfposition (s. Fig. 1) verschieben. Die Hubzylinder 66 sind im Raum zwischen der Innentrommel 8 und dem Außenmantel 2 und damit innerhalb des Wärmebehandlungsmediums angeordnet und an der verstärkten Stirnseite des Außenmantels 2 abgestützt. Jede Auswerferstange 52 ist mit einem Handhabungsabschnitt 66 über die Außenscheiben 54 hinaus verlängert, an dem die Kolbenstange 66 des Hubzylinders angreifen kann, um die Auswerferstange 52 radial nach außen zu verschieben. Wie in Fig. 1 gezeigt ist, kommen die Holzrohlinge 12 bei der Betätigung der Hubzylinder 66 und damit der Auswärtsbewegung der Auswerferstange 52 außerhalb des Radialfachs 10 in Auflage auf eine Schwenkplatte 70, die in Verlängerung des Radialfachs 10 angeordnet ist. Wie bereits bei der Zuführeinrichtung 14 werden die Holzrohlinge auch auf der Schwenkplatte 70 mittels einer Anpreßeinrichtung 64 fixiert. Die Schwenkplatte 70 läßt sich um einen vorbestimmten Winkel nach unten verschwenken (s. Fig. 1), so daß die Rohlinge 12 beim Lösen der Anpreßeinrichtung 64 aufgrund der Schwerkraft auf ein in Verlängerung der verschwenkten Schwenkplatte 70 ausgebildetes Transportband 22 gleiten. Dieses läßt sich seinerseits in die in Fig. 1 gestrichelt angedeutete horizontale Transportposition verschwenken. Über das Transportband 22 werden die vorbehandelten Rohlinge der sich anschließenden Hochleistungsmessermaschine der Anmelderin zugeführt.

Bei einer Trommellänge von 3 m und einem Trommeldurchmesser von 3,5 m lassen sich etwa 40 bis 50 Friese nebeneinanderliegend in jedem Radialfach 10 anordnen, so daß sich bei einer Fachanzahl von 95 Radialfächern 10 etwa 3800 bis 4750 Friese in einer Trommel anordnen lassen.

Während das vorbeschriebene Ausführungsbeispiel besonders zur Verarbeitung relativ kurzer Rohlinge 12 (sog. Kanteln oder Friese) vorgesehen ist, ist die im folgenden beschriebene Weiterbildung besonders für die Vorbehandlung langer Holzbohlen geeignet.

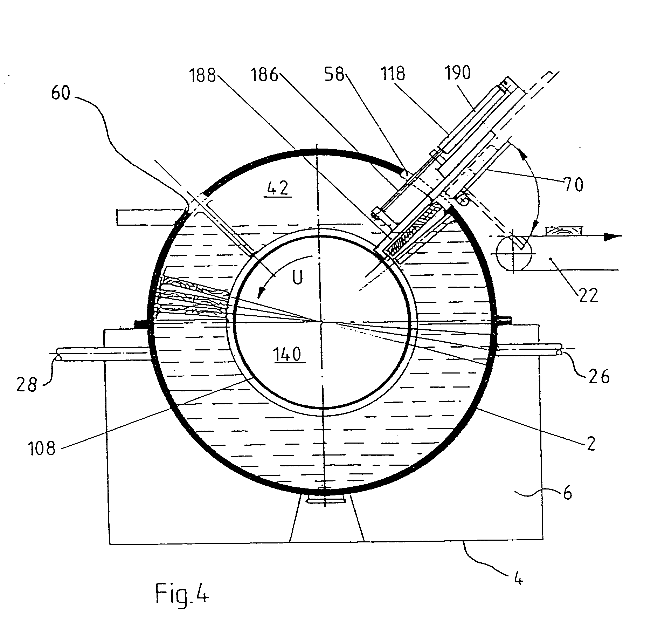

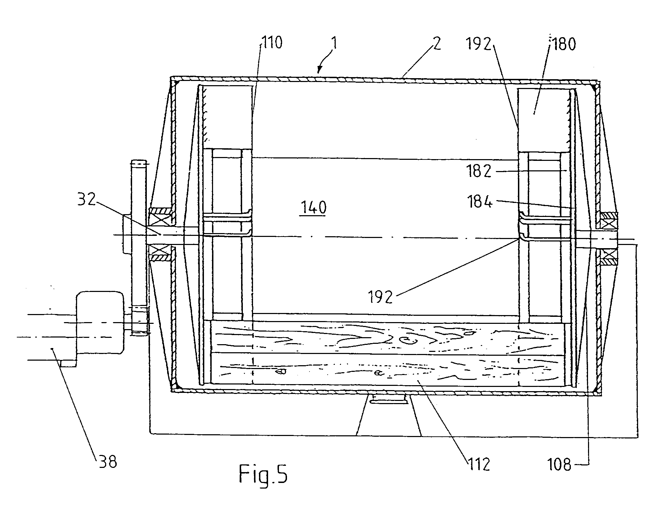

Das in den Fig. 4 und 5 gezeigte Ausführungsbeispiel unterscheidet sich vom vorbeschriebenen Ausführungsbeispiel im wesentlichen nur durch die Ausbildung der Abführeinrichtung 118 und der Innentrommel 108. Im folgenden werden die bei beiden Ausführungsbeispielen gleichartig ausgebildeten Bauteile mit gleichen Bezugszeichen versehen, während die vom ersten Ausführungsbeispiel abweichenden Bauteile mit dreistelligen Bezugszeichen versehen sind.

Die über die Antriebswelle 32 im Außenmantel 2 gelagerte Innentrommel 108 des zweiten Ausführungsbeispiels hat ebenfalls einen zylinderförmigen Grundkörper 140, auf dem die Radialfächer 110 zur Aufnahme der Rohlinge 112 von Fachböden 180 gebildet sind, die sich radial vom Außenumfang des Grundkörpers 140 nach außen zum Außenmantel 2 hin erstrecken. Die Fachböden 180 sind jeweils nur an den stirnseitigen Endabschnitten des Grundkörpers 140 ausgebildet, während im Bereich des Mittelabschnitts des Grundkörpers 140 keine Fachböden 180 vorgesehen sind. Die Fachböden 180 sind mittels je zwei umlaufender Abstandsringe 182 auf dem Grundkörper 140 befestigt, die auch den grundkörperseitigen Auflageabschnitt jedes Radialfachs 110 bilden. Die Stirnflächen der Radialfächer 110 werden, ähnlich wie beim vorbeschriebenen Ausführungsbeispiel, durch Außenscheiben 184 gebildet, in denen allerdings, wie im folgenden näher beschrieben, keine Führungen für eine Abführeinrichtung vorgesehen sein müssen. An jedem stirnseitigen Endabschnitt der Innentrommel 108 ist somit durch die beiden Abstandsringe 182, die Außenscheibe 184 sowie zweier benachbarter Fachböden 180 jeweils ein Abschnitt eines Radialfachs 110 gebildet, so daß durch jeweils zwei axial beabstandete Radialfachabschnitte ein Radialfach 110 zur Aufnahme einer oder mehrerer Holzbohlen 112 gebildet ist, deren Längsachse parallel zur Antriebswelle 32 liegt. Im Bereich des Mittelabschnitts der Holzbohlen 112 ist keine Abstützung vorgesehen. Bei dem in den Fig. 4 und 5 gezeigten Ausführungsbeispiel können jeweils zwei Holzbohlen 112 radial übereinanderliegend in einem Radialfach 110 angeordnet werden.

In einer Trommel mit einer Länge von 3 m, einem Durchmesser von 3,5 m und 95 Radialfächern 110 lassen sich somit 190 Holzbohlen (2.4 x 0.21 x 0.036) verarbeiten.

In den freien Mittelabschnitt der Innentrommel 108 greift durch die Abführöffnung 58 ein Greifer 186 einer Abführeinrichtung 118 ein, mittels dessen sich die Holzbohlen 112 aus dem Radialfach 110 heraus der Schwenkplatte 170 zuführen lassen. Der Greifer 186 hat einen weitgehend L-förmigen Greifabschnitt 188, der die dem Grundkörper 140 zugewandte Stirnseite einer Holzbohle 112 und die von der Auflagefläche abgewandte Großfläche der Holzbohlen 112 umgreift. Am Greifabschnitt 188 ist eine Kolbenstange eines Betätigungszylinders 190 befestigt, der sich in Radialrichtung durch die Abführöffnung 58 erstreckt. Da der Greifabschnitt 188 mittig, entlang eines relativ großen Teilabschnitts der Holzbohlen 112 angreift, ist deren Führung während der Radialbewegung des Betätigungszylinders 190 gewährleistet, so daS die Relativposition der beiden Holzbohlen 112 zueinander (s. gestrichelte Linien in Fig. 4) beibehalten bleibt. Eine eigene Anpreßeinrichtung wie beim 1. Ausführungsbeispiel ist nicht notwendig. Ähnlich wie beim ersten Ausführungsbeispiel lassen sich die Holzbohlen 112 gemeinsam oder vereinzelt durch eine Verschwenkung der Schwenkplatte 170 einem Transportband 22 zuführen, über das die Holzbohlen 112 zur anschließenden Verarbeitung einer Hochleistungsmessermaschine zugeführt werden.

Nachdem die Holzbohlen 112 auf der Schwenkplatte 170 abgelegt sind, wird der Greifabschnitt 188 wieder in seine in Fig. 4 gezeigte Grundposition zurückbewegt, in der er verbleibt, bis das nächste Holzbohlenpaar aufgrund der Drehung der Innentrommel 108 auf den Greifabschnitt 188 aufläuft.

Wie vorstehend beschrieben, sind beim zweiten Ausführungsbeispiel die Radialfächer 110 durch Fachböden 180 gebildet, die sich in der Ansicht nach Fig. 4 vom Grundkörper 140 sternförmig nach außen erstrecken. Durch die Radialanordnung der Fachböden 180 vergrößert sich der Spalt zwischen zwei benachbarten Fachböden 180 mit dem Abstand zum Grundkörper 140, so daß sich die Radialfächer 110 konisch zum Außenmantel 2 hin erweitern, so daß die Holzbohlen 112 möglicherweise mit einem übermäßigen Spiel in den Radialfächern 110 aufgenommen werden. Dieser konstruktive Nachteil läßt sich beseitigen, wenn die von den Außenscheiben 184 abgewandte Stirnkante 192 jedes Fachbodens 180 zum benachbarten Fachboden hin gebogen wird. Die Biegelinie ist dabei derart gewählt, daß die Stirnkante 192 im Parallelabstand zur Auflagefläche des benachbarten Fachbodens 180 verläuft. Bei dieser Weiterbildung liegen die Holzbohlen 112, wie in Fig. 4 gezeigt, jeweils an einer Stirnkante 192 eines Fachbodens 180 und/oder an der benachbarten Rückseite des nächsten Fachbodens 180 an. Die Abhängigkeit der Radialfachweite vom Abstand zum Grundkörper 140 läßt sich selbstverständlich auch auf andere Weise beseitigen, indem bspw. Fachböden 180 mit einem angepaßten Querschnittsprofil verwendet oder entsprechende Leisten auf den Fachböden 180 aufgebracht werden.

Offenbart ist eine Vorrichtung zur thermischen Vorbehandlung von Holzrohlingen, wobei diese in Radialfächern einer Trommel angeordnet werden, die mit einem Wärmebehandlungsmedium gefüllt ist. Dabei ist in einem ortsfesten Außenmantel eine Innentrommel drehbar gelagert, an deren Außenumfang die Radialfächer ausgebildet sind. Es werden zwei Lösungen vorgeschlagen, bei denen die Rohlinge einmal in ihrer Längserstreckung parallel zur Drehachse der Innentrommel und einmal in Radialrichtung der Innentrommel angeordnet sind. Eine derartige Einrichtung zeichnet sich durch einen geringen Platzbedarf aus, wobei die Wärmeverluste gegenüber herkömmlichen Einrichtungen wesentlich reduzierbar sind.

## Patentansprüche

1. Vorrichtung zur thermischen Vorbehandlung von Holzrohlingen in einem mit einem Wärmebehandlungsmedium gefüllten Wärmebehandlungsbad (42), in dem eine Vielzahl von Radialfächern (10, 110) zur Aufnahme der Holzrohlinge (12, 112) ausgebildet sind, wobei das Bad einen ortsfesten Außenmantel (2) hat, in dem eine Innentrommel (8, 108) drehbar gelagert ist, und wobei am Außenmantel (2) eine Zu- und/oder Abführöffnung (60, 58) für die Zu-/Abführung der Holzrohlinge (12, 112) in Radialrichtung vorgesehen ist, **dadurch gekennzeichnet,** daß der Außenmantel (2) des Wärmebehandlungsbads (42) als Trommel mit einer Zu- und/oder Abführöffnung (60, 58) zur Innentrommel (8, 108) ausgebildet ist.

2. Vorrichtung nach Anspruch 1, **dadurch gekennzeichnet,** daß die Radialfächer (10, 110) zur Aufnahme der Holzrohlinge (12, 112) am Außenumfang der Innentrommel ausgebildet sind.

3. Vorrichtung nach Anspruch 1 oder 2, **dadurch gekennzeichnet,** daß im Außenmantel (2) zumindest eine Längsausnehmung (60, 58) als Zu-/Abführöffnung ausgebildet ist.

4. Vorrichtung nach einem der vorhergehenden Ansprüche, **dadurch gekennzeichnet,** daß die Radialfächer (10) durch eine Vielzahl von koaxial zur Innentrommel (8) angeordneten, radial geschlitzten und im Axialabstand zueinander angeordneten Fachscheiben (44) gebildet sind, deren Schlitzkanten durch Axialplanken (50) verbunden sind, die Anlageflächen für die Holzrohlinge (12) bilden.

5. Vorrichtung nach einem der Ansprüche 1 bis 3, **dadurch gekennzeichnet,** daß die Radialfächer (110) durch am Außenumfang der Innentrommel (108) radial angeordnete Fachböden (180) gebildet sind.

6. Vorrichtung nach Anspruch 5, **dadurch gekennzeichnet,** daß die Fachböden (180) im Bereich der stirnseitigen Endabschnitte der Innentrommel (108) ausgebildet sind.

7. Vorrichtung nach Anspruch 5 oder 6, **dadurch gekennzeichnet,** daß zumindest eine Stirnkante (192) jedes Fachbodens (180) derart zur Auflagefläche des benachbarten Fachbodens (180) hin gebogen ist, daS die Stirnkante (192) im Parallelabstand zur Auflagefläche verläuft.

8. Vorrichtung nach den Ansprüchen 4, 6 oder 7, **gekennzeichnet,** durch eine Abführeinrichtung (118) mit einem radial bewegbaren Greifer (186), der sich im Bereich des Mittelabschnitts der Innentrommel (108) durch die Längsausnehmung (60) des Außenmantels (2) erstreckt.

9. Vorrichtung nach Anspruch 4, **dadurch gekennzeichnet,** daß der radial innenliegende Anlageabschnitt jedes Radialfachs (10) durch eine radial verschiebbare Auswerferstange (52) der Zu-/Abführeinrichtung (14 ,18) gebildet ist, die die Fachscheiben (44) im Bereich der Radialschlitze (46) durchsetzt und die in vorzugsweise zwei stirnseitigen Außenscheiben (54) der Innentrommel (8) geführt sind.

10. Vorrichtung nach Anspruch 9, **dadurch gekennzeichnet,** daß jede Auswerferstange (52) axial über die Außenscheiben (54) hinaus zu sich zu den Stirnseiten des Außenmantels (2) hin erstreckenden Handhabungsabschnitten (68) verlängert ist, an denen zur Radialverschiebung der Auswerferstange (52) eine Betätigungseinrichtung, vorzugsweise ein Hubzylinder (66), angreifen kann.

11. Vorrichtung nach Anspruch 10, **dadurch gekennzeichnet,** daß der Hubzylinder (66) außerhalb der Innentrommel (8) an den Stirnseiten des Außenmantels (2) abgestützt ist.

12. Vorrichtung nach einem der Ansprüche 4 bis 11, **dadurch gekennzeichnet,** daß der Zu-/Abführeinrichtung (14, 18, 118) eine Anpreßeinrichtung (64) für die Holzrohlinge (12, 112) zugeordnet ist.

13. Vorrichtung nach einem der vorhergehenden Ansprüche, **dadurch gekennzeichnet,** daß im Außenmantel (2) Vor- und Rücklauföffnungen (26, 28) für den Umlauf des Wärmebehandlungsmediums ausgebildet sind.

14. Vorrichtung nach einem der Ansprüche 2 bis 13, **dadurch gekennzeichnet,** daß die Zu-/Abführöffnungen (60, 58) oberhalb des Füllstands des Wärmebehandlungsmediums angeordnet sind.

15. Vorrichtung nach einem der vorhergehenden Ansprüche, **dadurch gekennzeichnet,** daß der Außenmantel (2) der Trommel (1) horizontal teilbar ist.

16. Vorrichtung nach einem der vorhergehenden Ansprüche, **dadurch gekennzeichnet,** daß ein Auflageabschnitt des Außenmantels (2) in ein Fundament (4) mit einer Isolationsschicht (6) eingebettet ist.

17. Vorrichtung nach einem der vorhergehenden Ansprüche, **dadurch gekennzeichnet,** daß der Außenmantel (2) mit einer Isolationsschicht versehen ist.

## Claims

1. Device for the thermal pretreatment of wood blanks in a heat treatment bath (42) which is filled with a heat treatment medium and in which a multiplicity of radial compartments (10, 110) are formed to receive the wood blanks (12, 112), wherein the bath has a stationary outer jacket (2) in which an inner drum (8, 108) is rotatably mounted, and wherein on the outer jacket (2) an inlet and/or outlet opening (60, 58) for the admission or discharge of the wood blanks (12, 112) is provided in the radial direction, characterized in that the outer jacket (2) of the heat treatment bath (42) is in the form of a drum having on inlet and/or outlet opening (60, 58) leading to the inner drum (8, 108).

2. Device according to Claim 1, characterized in that the radial compartments (10, 110) for the reception of the wood blanks (12, 112) are formed on the outer periphery of the inner drum.

3. Device according to Claim 1 or 2, characterized in that at least one longitudinal aperture (60, 58) is formed in the outer jacket (2) as an inlet/outlet opening.

4. Device according to one of the preceding claims, characterized in that the radial compartments (10) are formed by a multiplicity of radially slotted compartment discs (44) which are arranged coaxially to the inner drum (8) and spaced axially apart and in which the edges of the slots are connected by axial planks (50) which form contact surfaces for the wood blanks (12).

5. Device according to one of claims 1 to 3, characterized in that the radial compartments (110) are formed by compartment bottoms (180) arranged radially on the outer periphery of the liner drum (108).

6. Device according to Claim 5, characterized in that the compartment bottoms (180) are formed in the region of the end face parts of the inner drum (108).

7. Device according to Claim 5 or 6, characterized in that at least one face edge (192) of each compartment bottom (180) is bent towards the support surface of the adjoining compartment bottom (180) in such a manner that the face edge (192) extends parallel to and at a distance from the support surface.

8. Device according to Claim 4, 6 or 7, characterized by a discharge device (118) having a radially movable gripper (186) which in the region of the middle portion of the inner drum (108) extends through the longitudinal aperture (60) in the outer jacket (2).

9. Device according to Claim 4, characterized in that the radially inner contact portion of each radial compartment (10) is formed by a radially movable ejector rod (52) of the admission/discharge device (14, 18), which rod passes through the compartment discs (44) in the region of the radial slots (46) and which are guided in preferably two end face outer discs (54) of the inner drum (8).

10. Device according to Claim 9, characterized in that each ejector rod (52) is extended axially beyond the outer discs (54) to handling portions (68) which extend in the direction of the end faces of the outer jacket (2) and which can be acted on by an operating device, preferably a lifting cylinder (66), for the radial movement of the ejector rod (52).

11. Device according to Claim 10, characterized in that the lifting cylinder (66) is supported outside the inner drum (8) on the end faces of the outer jacket (2).

12. Device according to one of Claims 4 to 11, characterized in that a pressing device (64) for the wood blanks (12, 112) is associated with the admission/discharge device (14, 18, 118).

13. Device according to one of the preceding claims, characterized in that flow and return openings (26, 28) for the circulation of the heat treatment medium are formed in the outer jacket (2).

14. Device according to one of Claims 2 to 13, characterized in that the inlet/outlet openings (60, 58) are arranged above the filling level of the heat treatment medium.

15. Device according to one of the preceding claims, characterized in that the outer jacket (2) of the drum (1) is horizontally divisible.

16. Device according to one of the preceding claims, characterized in that a support portion of the outer jacket (2) is embedded in a foundation (4) having an insulation layer (6).

17. Device according to one of the preceding claims, characterized in that the outer jacket (2) is provided with an insulation layer.

## Revendications

1. Dispositif pour le prétraitement thermique d'ébauches en bois dans un bain de traitement thermique (42) rempli d'un fluide de traitement thermique, dans lequel sont formés un grand nombre de casiers radiaux (10, 110) destinés à recevoir les ébauches en bois (12, 112), le bain possédant une enveloppe extérieure (2) fixe, dans laquelle est monté tournant un tambour intérieur (8, 108) et une ouverture d'arrivée et/ou une ouverture d'évacuation (60, 58) pour l'arrivée ou l'évacuation des ébauches en bois (12, 112) étant prévue sur l'enveloppe extérieure (2), dans la direction radiale, caractérisé en ce que l'enveloppe extérieure (2) du bain de traitement thermique (42) est conçue à la manière d'un tambour avec une ouverture d'arrivée et/ou d'évacuation (60, 58) vers le tambour intérieur (8, 108).

2. Dispositif selon la revendication 1, caractérisé en ce que les casiers radiaux (10, 110) destinés à loger les ébauches en bois (12, 112) Sont formés sur le pourtour extérieur du tambour intérieur.

3. Dispositif sel on les revendications 1 ou 2, caractérisé en ce que dans l'enveloppe extérieure (2) il est formé au moins un évidement longitudinal (60, 58) servant d'ouverture d'arrivée/d'évacuation.

4. Dispositif selon l'une des revendications précédentes, , caractérisé en ce que les casiers radiaux (10) sont formés par un grand nombre de disques de casier (44) disposés coaxialement par rapport au tambour intérieur (8), fondus radialement et espacés axialement les uns des autres, dont les bords des fentes sont reliés par des planches axiales (50), qui froment les surfaces d'application des ébauches en bois (12).

5. Dispositif selon l'une des revendications 1 à 3, caractérisé en ce que les casiers radiaux (110) sont formés par des fonds de casier (180) disposés radialement sur le pourtour extérieur du tambour intérieur (108).

6. Dispositif selon la revendication 5, caractérisé en ce que les fonds (180) des casiers sont formés dans la zone des parties d'extrémité frontales du tambour intérieur (108).

7. Dispositif selon les revendications 5 ou 6, caractérisé en ce qu'au moins un bord frontal (192) de chaque fond (180) des casiers est courbé vers la surface de support du fond (180) voisin, de manière que le bord frontal (192) s'étende à une distance de la surface de support, parallèleent à cell-ci.

8. Dispositif selon les revendications 4, 6 ou 7, caractérisé par un dispositif d'évacuation (118) comportant une pince (186) déplaçable radialement, qui s'étend dans la zone de la Partie centrale du tambour intérieur (108). à traverse l'évidement longitudinal (60) de l'enveloppe extérieure (2).

9. Dispositif selon la revendication 4, caractérisé en ce que la partie d'application située radialement à l'intérieur de chaque casier radlal (10) et formée par une tige d'éjection (52), coulissant radialement, du dispositif d'arrivée/d'évacuation (14, 18), qui transverse les disques (44) des casiers dans la zone des fentes radiales (46) et qui est guidée dans de préférence deux disques extérieurs (54) frontaux du tambour intérieur (8).

10. Dispositif selon la revendication 9, caractérisé en ce que chaque tige d'éjection (52) est prolongée axialement au-delà des disques extérieurs (54) vers des parties de manipulation (68), s'étendant vers les côtes frontaux de l'enveloppe extérieure (2), parties de manipulation sur lesquelles peut agir un dispositif d'actionnement, de préférence un vérin (66), en vue du coulissement radial de la tige d'éjection (52).

11. Dispositif selon la revendication 10, caractérisé en ce que le vérin (66) prend appui à l'extérieur du tambour intérieur (8), contre les côtés frontaux de l'enveloppe extérieure (2).

12. Dispositif selon l'une des revendications 4 à 11, caractérisé en ce qu'au dispositif d'arrivée/d'évacuation (14, 18, 118) est associé un dispositif de pression (61) pour les ébauches en bois (12, 112).

13. Dispositif selon l'une des revendications précédentes, caractérisé en ce qu'il est formé dans l'enveloppe extérieure (2) des ouvertures aller et des ouvertures retour (26, 28) pour la circulation du fluide de traitement thermique.

14. Dispositif solon l'une des revendications 2 à 13, caractérisé en ce que les ouvertures d'arrivée/d'évacuation (60, 58) sont situées au-dessus du niveau du fluide de traitement thermique.

15. Dispositif selon l'une des revendications précédentes, caractérisé en ce que l'enveloppe extérieure (2) du tambour (1) peut être partagée horizontalement.

16. Dispositif selon l'une des revendications précédentes, caractérise en ce qu'une Partie de support de l'enveloppe extérieure (2) est noyée dans un soubassement (4) comportant une couche d'isolation (6).

17. Dispositif selon l'une des revendications précédentes, caractérisé en ce que l'enveloppe extérieure (2) est pourvue d'une couche d'isolation.
